# EUROPEAN PATENT APPLICATION

(11) **EP 4 765 322 A1**
(43) Date of publication of application: **24.06.2026**
(21) Application number: 24907895.7
(22) Date of filing: 03.12.2024
(51) Int. Cl.: H01M 10/48, H01M 10/42, G01L 1/16

(54) **BATTERY MANAGEMENT DEVICE, OPERATING METHOD THEREOF, AND BATTERY PACK**

(30) Priority: 20.12.2023 KR 20230187611
(71) Applicant: LG Energy Solution, Ltd., Seoul 07335 (KR)
(72) Inventor: JEONG, Won Jeon, Daejeon 34122 (KR)
(74) Representative: Plasseraud IP
(86) International application number: PCT/KR2024/019597
(87) International publication number: WO 2025/135611

(57) **Abstract**

A battery pack according to an embodiment disclosed herein may include a plurality of battery cells, a first material positioned between the plurality of battery cells, a piezoelectric sensor adjacent to the first material, a temperature sensor configured to detect temperatures of the plurality of battery cells, and a battery management apparatus configured to determine abnormality of the plurality of battery cells, abnormality of the piezoelectric sensor, and abnormality of the temperature sensor based on information received from the piezoelectric sensor and the temperatures of the plurality of battery cells.

## Description

### TECHNICAL FIELD

### CROSS-REFERENCE TO RELATED APPLICATION

This application claims priority to and the benefit of Korean Patent Application No. 10-2023-0187611 filed in the Korean Intellectual Property Office on December 20, 2023, the entire content of which is incorporated herein by reference.

### TECHNICAL FIELD

Embodiments disclosed herein relate to a battery management apparatus, an operating method thereof, and a battery pack.

### BACKGROUND ART

Recently, research and development of secondary batteries have been actively performed. Herein, the secondary batteries, which are chargeable/dischargeable batteries, may include all of conventional nickel (Ni)/cadmium (Cd) batteries, Ni/metal hydride (MH) batteries, etc., and recent lithium-ion batteries. Among the secondary batteries, a lithium-ion battery has a much higher energy density than those of the conventional Ni/Cd batteries, Ni/MH batteries, etc. Moreover, the lithium-ion battery may be manufactured to be small and lightweight, such that the lithium-ion battery has been used as a power source of mobile devices, and recently, a use range thereof has been extended to power sources for electric vehicles, attracting attention as next-generation energy storage media.

When a rapid temperature change occurs in a battery, there may be performance degradation and a risk of fire, such that a technique for preventing the temperature change of the battery has been designed variously. Specifically, by arranging other materials capable of absorbing heat around a battery cell included in the battery pack, the rapid temperature change of the battery cell may be prevented.

### DISCLOSURE

### TECHNICAL PROBLEM

Embodiments disclosed herein aim to provide a battery management apparatus, an operating method thereof, and a battery pack in which it may be determined through a piezoelectric sensor in the battery pack whether a phase transition of paraffin adjacent to a battery cell progresses normally.

Embodiments disclosed herein aim to provide a battery management apparatus, an operating method thereof, and a battery pack in which abnormality of a plurality of battery cells, abnormality of a piezoelectric sensor, or abnormality of a temperature sensor may be determined based on information obtained from the piezoelectric sensor and the temperature sensor.

Technical problems of the embodiments disclosed herein are not limited to the above-described technical problems, and other unmentioned technical problems would be clearly understood by one of ordinary skill in the art from the following description.

### TECHNICAL SOLUTION

A battery pack according to an embodiment disclosed herein includes a plurality of battery cells, a first material positioned between the plurality of battery cells, a piezoelectric sensor adjacent to the first material, a temperature sensor configured to detect temperatures of the plurality of battery cells, and a battery management apparatus configured to determine abnormality of the plurality of battery cells, abnormality of the piezoelectric sensor, and abnormality of the temperature sensor based on information received from the piezoelectric sensor and the temperatures of the plurality of battery cells.

In an embodiment, the battery management apparatus may be further configured to determine whether the first material undergoes a phase transition, based on the information received from the piezoelectric sensor.

In an embodiment, the battery management apparatus may be further configured to determine whether any one of the piezoelectric sensor or the temperature sensor is defective, when the piezoelectric sensor does not operate and the temperatures of the plurality of battery cells detected in the temperature sensor are less than or equal to a first set value.

In an embodiment, the battery management apparatus may be further configured to determine that the plurality of battery cells are in an overheated state, when the piezoelectric sensor does not operate and the temperatures of the plurality of battery cells detected in the temperature sensor are greater than or equal to a second set value.

In an embodiment, the first material may suppress an increase in the temperatures of the plurality of battery cells in charging/discharging of the plurality of battery cells.

In an embodiment, the first material may include paraffin.

A battery management apparatus according to an embodiment disclosed herein includes an information obtaining unit configured to obtain temperatures of a plurality of battery cells from a temperature sensor and obtain pressure information of a first material between the plurality of battery cells from a piezoelectric sensor and a controller configured to determine abnormality of the plurality of battery cells, abnormality of the piezoelectric sensor, and abnormality of the temperature sensor based on information received from the piezoelectric sensor and the temperatures of the plurality of battery cells.

In an embodiment, the controller may be further configured to determine whether the first material undergoes a phase transition, based on the information received from the piezoelectric sensor.

In an embodiment, the controller may be further configured to determine whether any one of the piezoelectric sensor or the temperature sensor is defective, when the piezoelectric sensor does not operate and the temperatures of the plurality of battery cells detected in the temperature sensor are less than or equal to a first set value.

In an embodiment, the controller may be further configured to determine that the plurality of battery cells are in an overheated state, when the piezoelectric sensor does not operate and the temperatures of the plurality of battery cells detected in the temperature sensor are greater than or equal to a second set value.

In an embodiment, the first material may suppress an increase in the temperatures of the plurality of battery cells in charging/discharging of the plurality of battery cells.

An operating method of a battery management apparatus according to an embodiment disclosed herein includes obtaining temperatures of a plurality of battery cells from a temperature sensor and obtain pressure information of a first material between the plurality of battery cells from a piezoelectric sensor and determining abnormality of the plurality of battery cells, abnormality of the piezoelectric sensor, and abnormality of the temperature sensor based on information received from the piezoelectric sensor and the temperatures of the plurality of battery cells.

In an embodiment, the determining of the abnormality of the plurality of battery cells, the abnormality of the piezoelectric sensor, and the abnormality of the temperature sensor based on the information received from the piezoelectric sensor and the temperatures of the plurality of battery cells may include determining whether the first material undergoes a phase transition, based on the information received from the piezoelectric sensor.

In an embodiment, the determining of the abnormality of the plurality of battery cells, the abnormality of the piezoelectric sensor, and the abnormality of the temperature sensor based on the information received from the piezoelectric sensor and the temperatures of the plurality of battery cells may include determining any one of the piezoelectric sensor or the temperature sensor is defective, when the piezoelectric sensor does not operate and the temperatures of the plurality of battery cells detected in the temperature sensor are less than or equal to a first set value.

In an embodiment, the determining of the abnormality of the plurality of battery cells, the abnormality of the piezoelectric sensor, and the abnormality of the temperature sensor based on the information received from the piezoelectric sensor and the temperatures of the plurality of battery cells may include determining that the plurality of battery cells are in an overheated state, when the piezoelectric sensor does not operate and the temperatures of the plurality of battery cells detected in the temperature sensor are greater than or equal to a second set value.

### ADVANTAGEOUS EFFECTS

A battery management apparatus, an operating method thereof, and a battery pack according to an embodiment disclosed herein may detect a phase transition of paraffin in the battery pack through a piezoelectric sensor and determine whether a temperature sensor or the piezoelectric sensor is defective.

The battery management apparatus, the operating method thereof, and the battery pack according to an embodiment disclosed herein may detect a defect of a temperature sensor and thus increase a fire prevention rate.

In addition, various effects identified directly or indirectly through this document may be provided.

### DESCRIPTION OF DRAWINGS

FIG. 1 is a block diagram showing a structure of a general battery pack.
FIG. 2 is a block diagram of a battery pack according to an embodiment disclosed herein.
FIG. 3 is a block diagram of a battery management apparatus according to an embodiment disclosed herein.
FIG. 4 is a flowchart showing an operating method of a battery management apparatus according to an embodiment disclosed herein.
FIG. 5 is a block diagram showing a hardware configuration of a computing system for performing an operating method of a battery management apparatus, according to an embodiment disclosed herein.

### MODE FOR INVENTION

Hereinafter, embodiments disclosed herein will be described in detail through exemplary drawings. In adding reference numerals to components of each drawing, it should be noted that the same components have the same numerals as much as possible even though they are displayed on different drawings. Moreover, in describing the embodiments disclosed herein, when it is determined that a detailed description of a related known configuration or function interferes with understanding of the embodiment disclosed herein, the detailed description thereof will be omitted.

To describe a component of an embodiment disclosed herein, terms such as first, second, A, B, (a), (b), etc., may be used. These terms are used merely for distinguishing one component from another component and do not limit the component to the essence, sequence, order, etc., of the component. The terms used herein, including technical and scientific terms, have the same meanings as terms that are generally understood by those skilled in the art, as long as the terms are not differently defined. The terms defined in a generally used dictionary should be interpreted as having the same meanings as the contextual meanings of the relevant technology and should not be interpreted as having ideal or exaggerated meanings unless they are clearly defined in the present application.

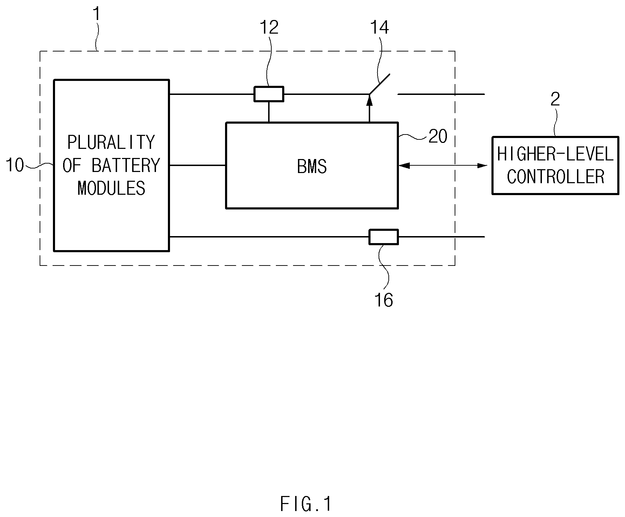

FIG. 1 is a block diagram showing a structure of a general battery pack.

Referring to FIG. 1, a battery control system including a battery pack 1 and a higher-level controller 2 included in a higher-level system according to an embodiment of the present disclosure is schematically shown.

As shown in FIG. 1, the battery pack 1 may include a plurality of battery cells 10 that include one or more battery cells and are chargeable/dischargeable, a switching unit 14 serially connected to positive (+) terminal sides or negative (-) terminal sides of the plurality of battery cells 10 to control a charging/discharging current flow of the plurality of battery cells 10, and a battery management system 20 for control and management to prevent over-charging and over-discharging by monitoring voltage, current, temperature, etc., of the battery pack 1. The battery pack 1 may include the plurality of battery cells 10, the sensor 12, the switching unit 14, and the battery management system 20 provided in plural.

Herein, as the switching unit 14 which is an element for controlling a current flow for charging or discharging of the plurality of battery cells 10, for example, at least one relay, magnetic contactor, etc., may be used according to specifications of the battery pack 1.

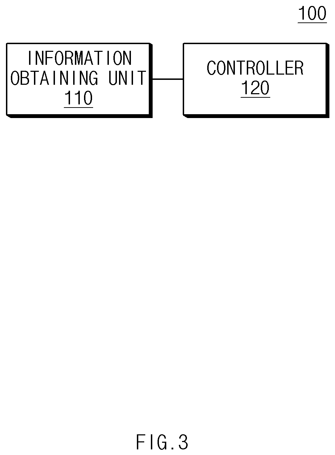

The battery management system 20, which is an interface for receiving measurement values of the above-described various parameter values, may include a plurality of terminals and a circuit, etc., connected thereto to process input values. The battery management system 20 may control on/off of the switching unit 14, e.g., a relay, a contactor, etc., and may be connected to the plurality of battery cells 10 to monitor the state of each battery cell 10. According to an embodiment, the battery management system 20 may include a battery management apparatus 100 of FIG. 3. According to another embodiment, the battery management system 20 may be different from the battery management apparatus 100 of FIG. 3. That is, the battery management apparatus 100 of FIG. 3 may be included in the battery pack 1 and may be configured as another device outside the battery pack 1. The following operation of the battery management apparatus 100 may also be performed in various devices such as not only a battery management system (BMS) in a vehicle, but also a server, a cloud, a charger, a charger/discharger, etc.

The higher-level controller 2 may transmit a control signal regarding the plurality of battery cells 10 to the battery management system 20. Thus, the battery management system 20 may also be controlled in terms of an operation thereof based on a signal applied from the higher-level controller 2.

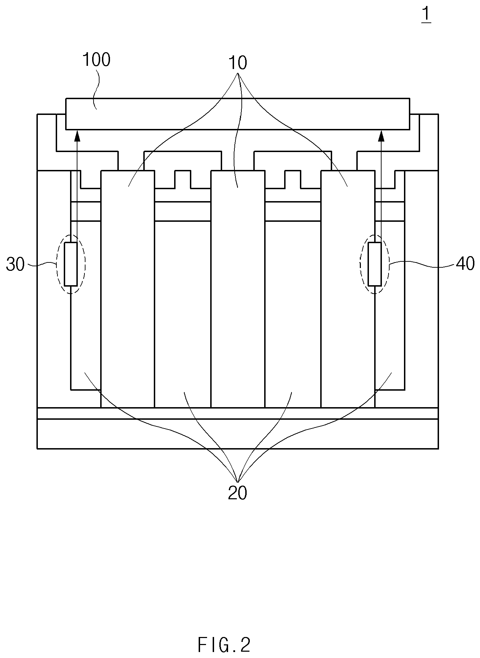

FIG. 2 is a block diagram of a battery pack according to an embodiment disclosed herein.

Referring to FIG. 2, the battery pack 1 according to an embodiment disclosed herein may include the plurality of battery cells 10, a first material 20, a piezoelectric sensor 30, a temperature sensor 40, and the battery management apparatus 100. According to an embodiment, the battery management apparatus 100 may be substantially the same as or may be included in the battery management system 20 of FIG. 1.

The first material 20 may be positioned between the plurality of battery cells 10. For example, the first material 20 may be arranged between the plurality of battery cells in adjacent to the plurality of battery cells 10. In another example, the first material 20 may be arranged at a position capable of absorbing heat when heat is generated from the plurality of battery cells 10. According to an embodiment, the first material 20 may be, but not limited to, paraffin.

According to an embodiment, the first material 20 may absorb heat based on a temperature of the plurality of battery cells 10, such that a phase transition may progress. For example, when the temperature of the plurality of battery cells 10 increases, the first material 20 may be liquefied by absorbing heat. In another example, when the temperature of the plurality of battery cells 10 decreases, the first material 20 may be solidified by emitting heat.

The piezoelectric sensor 30 may be adjacent to the first material 20. For example, the piezoelectric sensor 30 may sense a pressure change when a volume of the first material 20 changes due to the phase transition of the first material 20. According to an embodiment, when the first material 20 undergoes a phase transition to a solid, the volume thereof increases and thus the pressure increases, causing the piezoelectric sensor 30 to operate. According to another embodiment, when the first material 20 undergoes a phase transition to a liquid, the volume thereof decreases and thus the pressure decreases, causing the piezoelectric sensor 30 not to operate.

The temperature sensor 40 may detect the temperature of the plurality of battery cells 10. For example, the temperature sensor 40 may be provided in plural to detect a temperature of each of the plurality of battery cells 10. In another example, the temperature sensor 40 may be provided in singular or plural to detect temperatures of some of the plurality of battery cells 10. According to an embodiment, the temperature sensor 40 may be attached to a battery cell.

The battery management apparatus 100 may receive information from the piezoelectric sensor 30 and the temperature sensor 40. For example, the battery management apparatus 100 may determine abnormality of the plurality of battery cells 10, abnormality of the piezoelectric sensor 30, and abnormality of the temperature sensor 40, based on the information received from the piezoelectric sensor 30 and the temperature of the plurality of battery cells 10.

According to an embodiment, the battery management apparatus 100 may determine the phase transition of the first material 20 based on the information received from the piezoelectric sensor 30. For example, the battery management apparatus 100 may determine that the first material 20 undergoes the phase transition to a solid when the piezoelectric sensor 30 does not operate and then operates. In another example, the battery management apparatus 100 may determine that the first material 20 undergoes the phase transition to a liquid when the piezoelectric sensor 30 operates and then does not operate.

The battery management apparatus 100 may determine that any one of the piezoelectric sensor 30 or the temperature sensor 40 is defective when the piezoelectric sensor 30 does not operate and the temperatures of the plurality of battery cells detected in the temperature sensor 40 are less than or equal to a first set value. For example, the first set value may be a temperature at which the first material 20 undergoes the phase transition to a solid.

According to an embodiment, the battery pack 1 may include a plurality of piezoelectric sensors and a plurality of temperature sensors. In this case, the battery management apparatus 100 may determine whether any one of a piezoelectric sensor and a temperature sensor is defective, collectively taking account of information received from the plurality of piezoelectric sensors and the plurality of temperature sensors.

The battery management apparatus 100 may determine that the plurality of battery cells 10 are in an overheated state when the piezoelectric sensor 30 does not operate and the temperatures of the plurality of battery cells 10 detected in the temperature sensor 40 are greater than or equal to a second set value. For example, the second set value may be a temperature at which the first material 20 undergoes the phase transition to a liquid state.

According to an embodiment, the first material 20 may suppress a temperature change of the plurality of battery cells 10 in charging/discharging of the plurality of battery cells 10. For example, the first material 20 may be liquefied by absorbing heat generated from the plurality of battery cells 10, thereby suppressing a temperature increase of the plurality of battery cells 10.

FIG. 3 is a block diagram of a battery management apparatus according to an embodiment disclosed herein.

Referring to FIG. 3, the battery management apparatus 100 according to an embodiment disclosed herein may include an information obtaining unit 110 and a controller 120. According to an embodiment, the battery management apparatus 100 may be substantially the same as the battery management apparatus 100 of FIG. 2.

The information obtaining unit 110 may obtain temperatures of a plurality of battery cells from a temperature sensor and obtain pressure information of a first material between the plurality of battery cells from a piezoelectric sensor. For example, the temperature sensor may be attached to the plurality of battery cells to sense temperatures of all or some of the plurality of battery cells. In another example, the piezoelectric sensor may be attached in adjacent to the first material to sense the pressure information of the first material.

According to an embodiment, the first material may be positioned between the plurality of battery cells and may suppress a temperature increase of the plurality of battery cells in charging/discharging of the plurality of battery cells. For example, the first material may be paraffin.

According to an embodiment, the piezoelectric sensor may be adjacent to the first material. For example, the piezoelectric sensor may sense a pressure change when a volume of the first material changes due to the phase transition of the first material. According to an embodiment, when the first material undergoes a phase transition to a solid, the volume thereof increases and thus the pressure increases, causing the piezoelectric sensor to operate. According to another embodiment, when the first material undergoes a phase transition to a liquid, the volume thereof decreases and thus the pressure decreases, causing the piezoelectric sensor not to operate.

According to an embodiment, the temperature sensor may detect the temperatures of the plurality of battery cells. For example, the temperature sensor may be provided in plural to detect a temperature of each of the plurality of battery cells. In another example, the temperature sensor may be provided in singular or plural to detect temperatures of some of the plurality of battery cells. According to an embodiment, the temperature sensor may be attached to a battery cell.

The controller 120 may determine abnormality of the plurality of battery cells, abnormality of the piezoelectric sensor, and abnormality of the temperature sensor based on the information received from the piezoelectric sensor and the temperatures of the plurality of battery cells.

According to an embodiment, the controller 120 may determine whether the first material has undergone the phase transition, based on the information received from the piezoelectric sensor. For example, the controller 120 may determine that the first material 20 undergoes the phase transition to a solid when the piezoelectric sensor does not operate and then operates. In another example, the controller 120 may determine that the first material 20 undergoes the phase transition to a liquid when the piezoelectric sensor operates and then does not operate.

The controller 120 may determine abnormality of the plurality of battery cells, abnormality of the piezoelectric sensor, and abnormality of the temperature sensor based on whether the first material has undergone the phase transition and the temperatures of the plurality of battery cells.

According to an embodiment, the controller 120 may determine that any one of the piezoelectric sensor or the temperature sensor is defective when the piezoelectric sensor does not operate and the temperatures of the plurality of battery cells detected in the temperature sensor are less than or equal to the first set value. For example, the first set value may be a temperature at which the first material undergoes the phase transition to a solid.

According to an embodiment, the controller 120 may determine that the plurality of battery cells are in an overheated state when the piezoelectric sensor does not operate and the temperatures of the plurality of battery cells detected in the temperature sensor are greater than or equal to the second set value. For example, the second set value may be a temperature at which the first material undergoes the phase transition to a liquid state.

According to an embodiment, the temperature sensor and the piezoelectric sensor may be provided in plural. Thus, the controller 120 may determine whether the plurality of temperature sensors and the plurality of pressure sensors are normal, based on information received from the plurality of temperature sensors and the plurality of pressure sensors. For example, when there are two temperature sensors and one pressure sensor, the pressure sensor does not operate, and both the two temperature sensors indicate the temperatures of the plurality of battery cells being less than or equal to the first set value, then the controller 120 may determine that the pressure sensor is abnormal.

The battery management apparatus 100 and the battery pack 1 according to an embodiment disclosed herein may detect a phase transition of paraffin in the battery pack through a piezoelectric sensor and determine whether a temperature sensor or the piezoelectric sensor is defective.

The battery management apparatus 100 and the battery pack 1 according to an embodiment disclosed herein may detect a defect of the temperature sensor and thus increase a fire prevention rate.

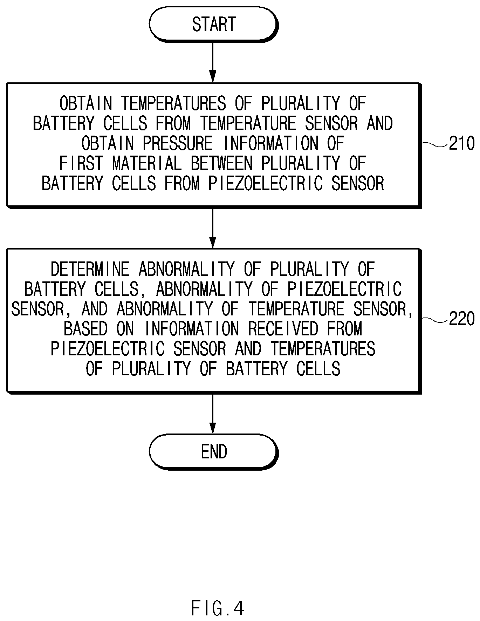

FIG. 4 is a flowchart showing an operating method of a battery management apparatus according to an embodiment disclosed herein. According to an embodiment, operations shown in FIG. 4 may be performed by the battery management apparatus 100 of FIG. 3.

Referring to FIG. 4, in operation 210, the information obtaining unit 110 may obtain temperatures of a plurality of battery cells from a temperature sensor and obtain pressure information of a first material between the plurality of battery cells from a piezoelectric sensor.

In operation 220, the controller 120 may determine abnormality of the plurality of battery cells, abnormality of the piezoelectric sensor, and abnormality of the temperature sensor based on the information received from the piezoelectric sensor and the temperatures of the plurality of battery cells.

According to an embodiment, in operation 220, the controller 120 may determine whether the first material has undergone the phase transition, based on the information received from the piezoelectric sensor. For example, the controller 120 may determine that the first material 20 undergoes the phase transition to a solid when the piezoelectric sensor does not operate and then operates. In another example, the controller 120 may determine that the first material 20 undergoes the phase transition to a liquid when the piezoelectric sensor operates and then does not operate.

According to an embodiment, in operation 220, the controller 120 may determine that any one of the piezoelectric sensor or the temperature sensor is defective when the piezoelectric sensor does not operate and the temperatures of the plurality of battery cells detected in the temperature sensor are less than or equal to the first set value. For example, the first set value may be a temperature at which the first material undergoes the phase transition to a solid.

According to an embodiment, in operation 220, the controller 120 may determine that the plurality of battery cells are in an overheated state when the piezoelectric sensor does not operate and the temperatures of the plurality of battery cells detected in the temperature sensor are greater than or equal to the second set value. For example, the second set value may be a temperature at which the first material undergoes the phase transition to a liquid state.

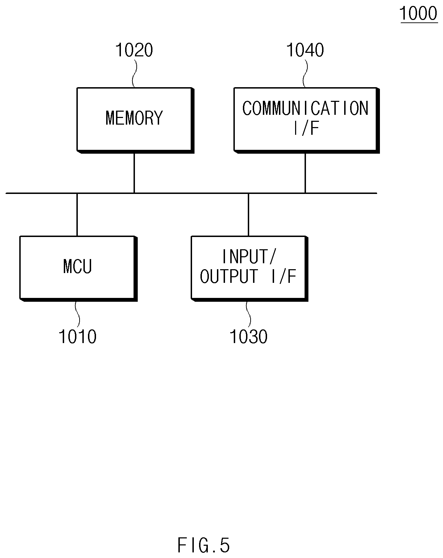

FIG. 5 is a block diagram showing a hardware configuration of a computing system for performing an operating method of a battery management apparatus, according to an embodiment disclosed herein.

Referring to FIG. 5, a computing system 1000 according to an embodiment disclosed herein may include a microcontroller unit (MCU) 1010, a memory 1020, an input/output interface (I/F) 1030, and a communication I/F 1040.

The MCU 1010 may be a processor that executes various programs (e.g., a phase transition determination program, an abnormality determination program, etc.) stored in the memory 1020, processes various information including abnormality of the plurality of battery cells, abnormality of the piezoelectric sensor, abnormality of the temperature sensor, whether the phase transition of the first material occurs, etc., through these programs, and executes the above-described functions of the controller included in the battery management apparatus shown in FIG. 3.

The memory 1020 may store various programs such as a phase transition determination program, an abnormality determination program, etc. The memory 1020 may store various information including abnormality of the plurality of battery cells, abnormality of the piezoelectric sensor, abnormality of the temperature sensor, whether the phase transition of the first material occurs, etc.

The memory 1020 may be provided in plural, depending on a need. The memory 1020 may be a volatile or nonvolatile memory. For the memory 1020 as the volatile memory, random access memory (RAM), dynamic RAM (DRAM), static RAM (SRAM), etc., may be used. For the memory 1020 as the nonvolatile memory, read only memory (ROM), programmable ROM (PROM), electrically alterable ROM (EAROM), erasable PROM (EPROM), electrically erasable PROM (EEPROM), flash memory, etc., may be used. The above-listed examples of the memory 1020 are merely examples and are not limited thereto.

The input/output I/F 1030 may provide an interface for transmitting and receiving data by connecting an input device (not shown) such as a keyboard, a mouse, a touch panel, etc., and an output device such as a display (not shown), etc., with the MCU 1010.

The communication I/F 1040, which is a component capable of transmitting and receiving various data to and from a server, may be various types of devices capable of supporting wired or wireless communication. For example, the battery management apparatus may transmit and receive various information including abnormality of the plurality of battery cells, abnormality of the piezoelectric sensor, abnormality of the temperature sensor, whether the phase transition of the first material occurs, etc., to and from a separately provided external server through the communication I/F 1040.

As such, a computer program according to an embodiment disclosed herein may be recorded in the memory 1020 and processed by the MCU 1010, thus being implemented as a module that performs functions shown in FIG. 3.

The above description is merely illustrative of the technical idea disclosed herein, and various modifications and variations will be possible without departing from the essential characteristics of the embodiments disclosed herein by those of ordinary skill in the art to which the embodiments disclosed herein pertains.

Therefore, the embodiments disclosed herein are intended for description rather than limitation of the technical spirit of the embodiments disclosed herein and the scope of the technical spirit disclosed herein is not limited by these embodiments. The protection scope of the technical spirit disclosed herein should be interpreted by the following claims, and all technical spirits within the same range should be understood to be included in the range of this document.

### [EXPLANATION OF REFERENCE NUMERALS DESIGNATING THE MAJOR ELEMENTS OF THE DRAWINGS]

1: BATTERY PACK
2: HIGHER-LEVEL CONTROLLER
10: PLURALITY OF BATTERY CELLS
12: SENSOR
14: SWITCHING UNIT
20: BATTERY MANAGEMENT SYSTEM
100: BATTERY MANAGEMENT APPARATUS
110: INFORMATION OBTAINING UNIT
120: CONTROLLER
1000: COMPUTING SYSTEM
1010: MCU
1020: MEMORY
1030: INPUT/OUTPUT I/F
1040: COMMUNICATION I/F

## Claims

1. A battery pack comprising:
a plurality of battery cells;
a first material positioned between the plurality of battery cells;
a piezoelectric sensor adjacent to the first material;
a temperature sensor configured to detect temperatures of the plurality of battery cells; and
a battery management apparatus configured to determine abnormality of the plurality of battery cells, abnormality of the piezoelectric sensor, and abnormality of the temperature sensor based on information received from the piezoelectric sensor and the temperatures of the plurality of battery cells.

2. The battery pack of claim 1, wherein the battery management apparatus is further configured to determine whether the first material undergoes a phase transition, based on the information received from the piezoelectric sensor.

3. The battery pack of claim 1, wherein the battery management apparatus is further configured to determine whether any one of the piezoelectric sensor or the temperature sensor is defective, when the piezoelectric sensor does not operate and the temperatures of the plurality of battery cells detected in the temperature sensor are less than or equal to a first set value.

4. The battery pack of claim 1, wherein the battery management apparatus is further configured to determine that the plurality of battery cells are in an overheated state, when the piezoelectric sensor does not operate and the temperatures of the plurality of battery cells detected in the temperature sensor are greater than or equal to a second set value.

5. The battery pack of claim 1, wherein the first material suppresses an increase in the temperatures of the plurality of battery cells in charging/discharging of the plurality of battery cells.

6. The battery pack of claim 1, wherein the first material comprises paraffin.

7. A battery management apparatus comprising:
an information obtaining unit configured to obtain temperatures of a plurality of battery cells from a temperature sensor and obtain pressure information of a first material between the plurality of battery cells from a piezoelectric sensor; and
a controller configured to determine abnormality of the plurality of battery cells, abnormality of the piezoelectric sensor, and abnormality of the temperature sensor based on information received from the piezoelectric sensor and the temperatures of the plurality of battery cells.

8. The battery management apparatus of claim 7, wherein the controller is further configured to determine whether the first material undergoes a phase transition, based on the information received from the piezoelectric sensor.

9. The battery management apparatus of claim 7, wherein the controller is further configured to determine whether any one of the piezoelectric sensor or the temperature sensor is defective, when the piezoelectric sensor does not operate and the temperatures of the plurality of battery cells detected in the temperature sensor are less than or equal to a first set value.

10. The battery management apparatus of claim 7, wherein the controller is further configured to determine that the plurality of battery cells are in an overheated state, when the piezoelectric sensor does not operate and the temperatures of the plurality of battery cells detected in the temperature sensor are greater than or equal to a second set value.

11. The battery management apparatus of claim 7, wherein the first material suppresses an increase in the temperatures of the plurality of battery cells in charging/discharging of the plurality of battery cells.

12. An operating method of a battery management apparatus, the operating method comprising:
obtaining temperatures of a plurality of battery cells from a temperature sensor and obtain pressure information of a first material between the plurality of battery cells from a piezoelectric sensor; and
determining abnormality of the plurality of battery cells, abnormality of the piezoelectric sensor, and abnormality of the temperature sensor based on information received from the piezoelectric sensor and the temperatures of the plurality of battery cells.

13. The operating method of claim 12, wherein the determining of the abnormality of the plurality of battery cells, the abnormality of the piezoelectric sensor, and the abnormality of the temperature sensor based on the information received from the piezoelectric sensor and the temperatures of the plurality of battery cells comprises determining whether the first material undergoes a phase transition, based on the information received from the piezoelectric sensor.

14. The operating method of claim 12, wherein the determining of the abnormality of the plurality of battery cells, the abnormality of the piezoelectric sensor, and the abnormality of the temperature sensor based on the information received from the piezoelectric sensor and the temperatures of the plurality of battery cells comprises determining whether any one of the piezoelectric sensor or the temperature sensor is defective, when the piezoelectric sensor does not operate and the temperatures of the plurality of battery cells detected in the temperature sensor are less than or equal to a first set value.

15. The operating method of claim 12, wherein the determining of the abnormality of the plurality of battery cells, the abnormality of the piezoelectric sensor, and the abnormality of the temperature sensor based on the information received from the piezoelectric sensor and the temperatures of the plurality of battery cells comprises determining that the plurality of battery cells are in an overheated state, when the piezoelectric sensor does not operate and the temperatures of the plurality of battery cells detected in the temperature sensor are greater than or equal to a second set value.
